# EUROPÄISCHE PATENTSCHRIFT

(11) **EP 0 836 989 B1**
(45) Veröffentlichungstag und Bekanntmachung des Hinweises auf die Patenterteilung: **08.01.2003**
(21) Anmeldenummer: 97117214.3
(22) Anmeldetag: 04.10.1997
(51) Int. Cl.: B64C 21/08, B64C 5/06, B64C 21/06

(54) **Seitenleitwerkstruktur für ein Flugzeug**
Aircraft vertical stabilizer structure
Structure pour empennage vertical d'avion

(30) Priorität: 18.10.1996 DE 19643069
(43) Veröffentlichungstag der Anmeldung: 22.04.1998
(73) Patentinhaber: Airbus Deutschland GmbH, 21129 Hamburg (DE)
(72) Erfinder: Meister, Jürgen, Dipl.-Ing., 21614 Buxtehude (DE); Held, Werner, Dipl.-Ing., 28857 Syke (DE); Pfennig, Jürgen, Dipl.-Ing., 27327 Marfeld (DE)
(74) Vertreter: Hansmann, Dierk, Dipl.-Ing.

(56) Entgegenhaltungen:
- EP-A- 0 436 243
- EP-A- 0 536 874
- EP-A- 0 630 807

## Beschreibung

Die Erfindung bezieht sich auf eine Seitenleitwerksstruktur für ein Flugzeug gemäß dem Oberbegriff des Anspruchs 1. Mit ihr wird primär die Absaugung der gestörten Grenzschicht am Seitenleitwerk betrieben, um dort die Laminarströmung zu stabilisieren und / oder eine Strömungsablösung auszuschließen.

Das Prinzip des künstlichen Erhaltens / Erzeugens einer laminaren Strömung durch Absaugen der auf einen Flügel oder einem Triebwerk auftreffenden Luftströmung ist weitestgehend bekannt. Danach wird durch Absaugung der gestörten Grenzschicht an Tragflügelprofilen die Laminarhaltung der Luftströmung an der Tragfläche eines Flugzeuges in verschiedenen Lösungen offenbart.

Es ist bekannt, daß die auf eine Tragfläche auftreffende Luftströmung nicht an der Oberfläche dicht anliegt - sondern die einzelnen Luftpartikel verwirbeln. Diese Verwirbelungen erhöhen den Luftwiderstand der Tragflächen, der durch Absaugen der Strömung an der Vorderkante der Tragfläche sich beeinflußen läßt. Dadurch wird eine künstliche Laminarströmung erzwungen und ein Verwirbeln der Strömung nahezu ausgeschlossen bzw. verzögert.

In der Zeitschrift FLUG REVUE [Hillebrand, H. L.: FLUG REVUE 12/1985, Seite 69] wurden dazu retrospektive Lösungsvorschläge angedeutet.
Danach sah ein Vorschlag von " Lockheed " die Sandwich-Konstruktion eines Flügelstücks aus Nomex-Waben mit einer Graphit-Epoxy-Haut vor, über der eine dünne Haut liegt. In dieser äußeren Haut sind Längsschlitze eingeritzt, die quer zur Strömungsrichtung verlaufen. Durch die Schlitze, die auf der Ober- und Unterseite der Tragfläche, jedoch nur im Nasenbereich verlaufen, wird - durch Erzeugung eines Unterdruckes in den Kammern der Tragfläche - die Luft in das Flächeninnere abgesaugt. Die angesaugte Luftmenge kann den Außenbedingungen entsprechend über eine Kontrolleinheit geregelt werden.

Nach einem Vorschlag von " Douglas " wird die Ausrüstung einer Tragflächenoberfläche erwähnt, bei der auf einer Fiberglas-Unterstruktur ein perforiertes Titanblech geringer Stärke aufgebracht ist. Die Flächenperforation wird mit winzigen Löchern, die zueinander einen sehr geringem Abstand besitzen, erreicht. Es wird angenommen, daß die Perforation sich im Nasenbereich der Tragfläche befindet, da man ein Absaugen der Luft durch die Löcher publizierte.
Beide Lösungsvorschläge beziehen sich auf ein Tragflächenkonzept, mit dem durch Schlitzung oder Löcherung der Tragflächenoberfläche eine Absaugung der die Tragfläche umströmenden Grenzschicht ober- und / oder unterhalb und nur im Nasenbereich betrieben werden kann. Detailierte Lösungsansätze, die in Funktion einer Anordnung die Absaugung einer Tragflügeloberfläche mit geeigneten Mitteln beschreiben, werden nicht offenbart. Es werden auch keine Anregungen vermittelt, mittels derer man zu einer Lösung für eine Seitenleitwerksstruktur gelangen würde, mit der sich die gestörte Grenzschicht an einem Seitenleitwerk kontrolliert laminisieren läßt und ein Vereisen der Seitenleitwerksoberfläche verhindert wird.

Mit der EP 0 436 243 B1 wird eine Flugzeugstruktur vorgestellt, an deren Oberfläche die gestörte Grenzschicht beeinflußt wird. Die Flugzeugstruktur, bei der im besonderen an der Oberfläche eines Flugzeugflügels abgesaugt wird, besitzt mehrere sich in Flügelspannweite erstreckende Kammerunterteilungen, denen eine mehrschichtig aufgebaute perforierte Außenhaut aufliegt. Mit Hilfe einer Kompressoreinheit, die mit der Kammerstruktur, welche sich im vorderen (angeströmten) Bereich des Flügels (Flügelvorderkante und ober- und unterhalb angrenzende Bereiche des Flügels) befindet, in Verbindung steht, initiiert man einerseits eine Luftströmung, um vordere (Teil-)Bereiche der Außenhaut zu enteisen, oder erzeugt man andererseits ein Kammerunterdruck, um die Absaugung an diesen Abschnitten zu betreiben. Dabei sitzen an den Kammerwänden bestimmter Kammern eingebaute Rückschlagventile, mit denen die Durchlaßrichtung der Luftströmung zwischen benachbarten Kammern im vorderen Flügelkasten irreversibel festgelegt wird. Dabei ermöglichen die Rückschlagventile ein Enteisen der Ober- und Unterseite der Tragfläche, indem der Luftstrom warmer Luft in einer Richtung durch ein Kammernsystem ausgeblasen wird. Im entaktivierten Enteisungsmode verhindern die Rückschlagventile, daß dagegen im Absaugemode nicht die Ober- und Unterseite - sondern nur die Vorderkante - der Tragfläche abgesaugt wird.

Die Flugzeug(flügel)struktur sieht keine Justierung der Absaug- bzw. Ausblasmengen an Luft vor. Danach wird eine Absaug- bzw. Ausblasverteilung der Luft im bzw. am Flugzeugflügel nur mit fester Einstellung realisiert, so daß der Luftverteilungszustand nicht den vorherrschenden kausalen Bedingungen zur Beeinflußung der Grenzschichten anpaßbar wäre. Es wird erwähnt, daß im Absaugemode ein Durchströmen der nicht abgesaugten Kammern - aufgrund des Druckgradienten über der betreffenden Kammer [das heißt: im Bereich höheren Außendruckes strömt in die Kammer(n) Luft ein und im Bereich niedrigen Außendruckes strömt aus der (den) Kammer(n) Luft aus] - auftritt, weshalb die Gefahr der Strömungsablösung niemals auszuschließen wäre.
Ungeachtet der aufwendig gestalteten Struktur wird auch die zuverlässige Funktion - unter dem Aspekt kausal anzupassender Absaugbedingungen - bezweifelt.
2Das Lösungskonzept berücksichtigt die Ableitung verschiedener Abluftströme nach außerhalb des Flugzeuges, wobei sich die Ableitung der Turbinenabluft und der abgesaugten Luft nur mit hohem (konstruktiven und technologischen) Aufwand betreiben läßt. Erfolgt kein Absaugen, dann läßt sich das (teilweise) Einströmen der Außenluft durch das Tragprofil (die Außenhaut) nach innerhalb in die Kammern kaum vermeiden, weshalb unter anderem auch an den Kammerwänden (bestimmter Kammern) zusätzlich die erwähnten Rückschlagventile installiert sind, um das Eindringen dieser Außenluft in den nicht abgesaugten Kammernteil auszuschließen.

Den vorgenannten Lösungen kann kein Hinweis entnommen werden, nachdem man durch Übertragung der offenbarten Maßnahmen zu einem laminar kontrollierten Seitenleitwerk für ein Flugzeug mit weitestgehend ungestörter homogener Absaugefläche gelangen würde.

Demzufolge liegt der Erfindung die Aufgabe zugrunde, eine gattungsgemäße Seitenleitwerksstruktur derart zu gestalten, daß mit ihr die kontrollierte Absaugung der gestörten Grenzschicht am Seitenleitwerk erreicht wird und außerdem ein Vereisen des Seitenleitwerksnasenbereiches verhindert werden kann. Durch geeignete Maßnahmen soll eine laminare Oberflächenströmung am Seitenleitwerk realisiert werden, wodurch sich der Flugzeug-Luftwiderstand verringert, eine Ersparnis an Treibstoff erreicht wird und eine erhebliche Verbesserung der Wirtschaftlichkeit eines Passagierflugzeuges zu verzeichnen ist.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der Zeichnungen näher beschrieben. Es zeigen
- Fig. 1: eine Seitenleitwerksstruktur mit Seitenruder einschließlich Darstellung mehrerer Rohrleitungsverbindungen und Mittel zur Absaugung bzw. Ausblasung und zur meßtechnischen Kontrolle;
- Fig. 2: eine Querschnittsdarstellung des Nasenkastens.

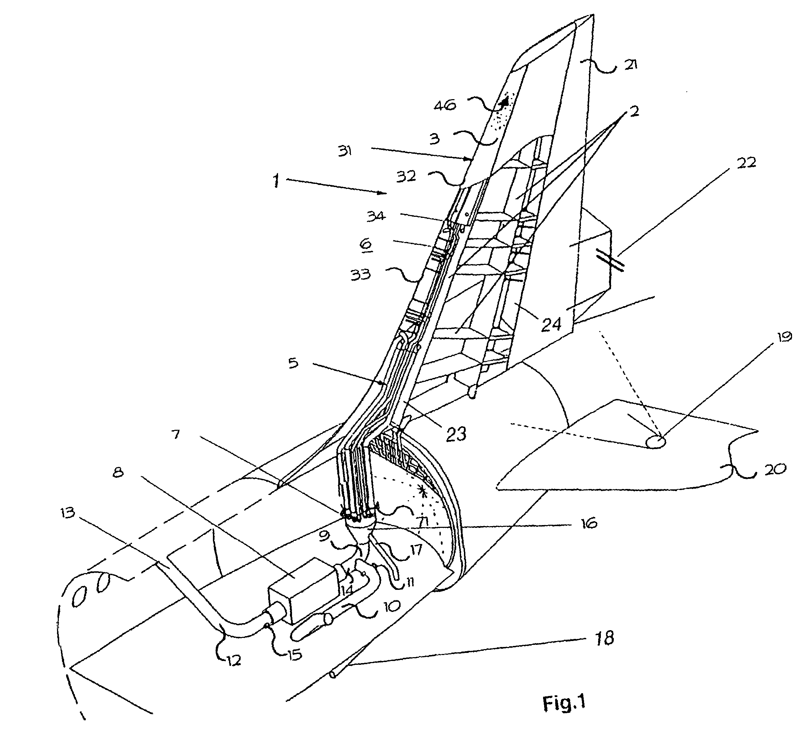

In der Fig. 1 ist der Aufbau der Seitenleitwerksstruktur für das Seitenleitwerk 1 eines Passagierflugzeuges dargestellt. Das Seitenleitwerk 1 besteht grundsätzlich aus der Seitenleitwerks-Tragstruktur 2, der stirnseitig am Vorderholm 23 ein Seitenleitwerksnasenteil 3 fest aufsitzt und der stirnrückseitig am Hinterholm 24 ein Seitenruder 21 nachgeordnet ist. Ebenfalls erkennbar ist die definierte Anordnung des Seitenleitwerkes 1 und eine der beiden Höhenflossen 20 des Höhenleitwerkes am Rumpfheck des Passagierflugzeuges, wobei die der Seitenleitwerksstruktur zugeordneten Rohrleitungen und angegebenen Mittel mit dargestellt sind.

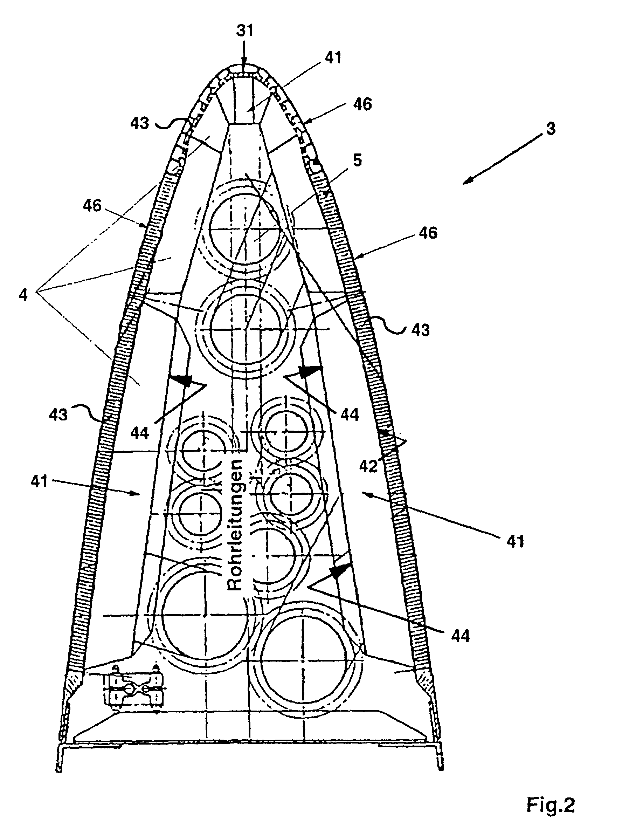

Mit einem Vorgriff auf die Querschnittsdarstellung nach der Fig. 2 wird veranschaulicht, daß das Seitenleitwerksnasenteil 3 aus einem (in Spannweite des Seitenleitwerkes 1 sich erstreckenden) Nasenprofilrand 4 besteht. Letzterer besitzt eine nach innen gewölbte parabelgenäherte Form und ist durch Kammern 41 unterteilt ist. Die Kammern 41 besitzen in der Spannweite des Seitenleitwerkes 1 einen geschlossenen Kanalverlauf und ergeben eine Kammernunterstruktur. Diese Kammernunterstruktur (suction chambers) besteht aus gefalteten Blechen, die die Unterkammerung der Seitenleitwerksstruktur bilden. Die Außenfläche 42 des Nasenprofilrandes 4 ist perforiert ausgeführt. Auf ihr liegt befestigt ein perforiertes Flächenelement 43, das sich der Form des Nasenprofilrandes 4 anpaßt. Das Flächenelement 43 stellt funktionell eine Trag- und Stützstruktur dar, die mit dem Nasenprofilrand 4 gemeinsam eine Verbundstruktur bildet. Zwischen dem Vorderholm 23 der Seitenleitwerk-Tragstruktur 2 und der spannweitenweise sich erstreckenden Innenfläche des Nasenprofilrandes 4 spannt sich ein (nicht dargestellter) Hohlraum auf, den die Seitenleitwerk-Tragstruktur 2 begrenzt. Dabei sind mindestens ein Ende der Kammern 41 und ein Ende des Hohlraumes verschlossen.

Auf dem Flächenelement 43 ist außerdem eine perforierte Schicht 46 befestigt, die den Vorderkantenbereich 31 des Seitenleitwerksnasenteiles 3 überdeckt. Diese Schicht 46 stellt ein perforiertes Blech dar, das mit geeigneten Maßnahmen auf der Oberfläche des Flächenelementes 43 befestigt wird. Die Perforation des Außenbleches wird mit lasergebohrten Löchern realisiert, durch deren Fläche (Muster) die (später beschriebene) kontrollierte Absaugung der gestörten Grenzschicht 6 (mit den der Seitenleitwerksstruktur zugeordneten Mitteln) erfolgt.

Innerhalb des spannweitenweise erstreckenden Hohlraumes (unterhalb des nasenprofilrandes 4) befinden sich mehrere Rohrleitungen 5, die in Fig. 1 offenliegend dargestellt sind. Dabei ist die betreffende Kammer 41 jeweils separat mit einer Rohrleitung 5 verbunden. Der Verbindungsübergang der einzelnen Rohrleitung 5 zur betreffenden Kammer 41 ist gekapselt ausgeführt.

Es ist vorgesehen, das Seitenleitwerksnasenteil 3 zweigeteilt auszuführen. Diese Ausführungsform wird in der Fig. 1 mit dem Hinweis auf die Lage eines oberen und eines unteren Seitenleitwerksnasenteiles 32, 33, die spannweitenweise hintereinander angeordneten sind, angedeutet. Da sich die Zweiteilung (aus technologischen Erwägungen) auf die unterhalb dem Seitenleitwerksnasenteil 3 befindliche Seitenleitwerk-Tragstruktur 2 überträgt, wird - auf die Spannweite des Seitenleitwerkes 1 bezogen - die zur Leitwerksspitze gerichtete obere stirnseitige Außenfläche des oberen Seitenleitwerksnasenteiles 33 (und der darunter liegenden Bereich der Oberfläche des Nasenprofilrandes 4) perforiert ausgeführt sein.
Bei dieser Ausführung wird dann die Schicht 46, welche auf diesem Teil der Außenfläche aufgebracht ist, nur in diesem Bereich mit einer Perforation versehen sein. Deswegen wird nur ein Teilbereich der Verbundstruktur des Seitenleitwerksnasenteiles 3 perforiert ausgeführt, auf dem die perforierte Schicht (46) aufgebracht ist. Dabei bleibt nicht ausgeschlossen, daß nur ein streifenförmiger Bereich der Verbundstruktur perforiert ausgebildet ist, dem die perforierte Schicht 4 aufliegt.
Die zur Leitwerkswurzel gerichtete untere Außenfläche wird oftmals keine Perforierung aufweisen, so daß der Verbindungsübergang der Rohrleitungen 5 dann zum nicht perforierten Nasenbereich der Seitenleitwerksstruktur erfolgen wird.

Das obere und / oder untere Seitenleitwerksnasenteil 32, 33 wird im Staulinienbereich mit Absaugeports (Tappings) ausgestaltet, um hernach die an ihrer Oberfläche abgesaugte und in die Kammernunterstruktur geleitete Luft aus den Kammern 41 zu (be)fördern. Da die Absaugekammern ein(e) kleines (kleine) Volumen (Gestalt) aufweisen, sollen die Absaugeports eine gleichmäßige Absaugverteilung an deren Oberfläche gewährleisten.

Es wird ergänzt, daß die Seitenleitwerk-Tragstruktur 2 allgemein einen Seitenleitwerkskasten verkörpert, der auf die Spannweite des Seitenleitwerkes 1 bezogen fertigungstechnisch zweigeteilt ausgeführt ist. Danach ergeben zwei spannweitenweise hintereinander angeordnete Seitenleitwerksnasenkastenteile, ein oberes und unteres Nasenkastenteil, in ihrer Integration den Seitenleitwerkskasten. Dabei ist die obere stirnseitige Außenfläche ein oberes Seitenleitwerksnasenkastenteil zur Leitwerksspitze gerichtet. Die untere stirnseitige Außenfläche eines unteren Seitenleitwerksnasenkastenteiles ist zur Leitwerkswurzel gerichtet. Die stirnseitigen Innenflächen beider Seitenleitwerksnasenkastenteile liegen einer Schnittstelle des (zwei)geteilten Seitenleitwerkskastens zueinander an.

Im weiteren wird auf die Mittel zur Absaugung bzw. Ausblasung und zur meßtechnischen Kontrolle näher eingegangen, deren Lage und (luftstrombezogene) Verbindung zueinander man aus der Fig. 1 entnehmen kann.

Mit den der Seitenleitwerksstruktur zugeordneten und nachfolgend angegebenen Mitteln soll primär die Beeinflußung der (das Seitenleitwerk 1 umströmenden) gestörten Grenzschicht (wenigstens der Mikroturbulenzen) durch deren Absaugung geschehen, wobei sekundär (unter Ausnutzung flugzeuginterner Energie-Recourcen) mit diesen Mitteln auch ein Vereisen der Oberfläche des Leitwerkes 1 (wenigstens des Vorderkantenbereiches 31 des Seitenleitwerksnasenteiles 31 verhindert werden kann. Letztlich ist für den Transport der ab- bzw. angesaugten Luftmenge(n) zu sorgen, wobei eine Technologie der zu bewegenden Luftströme umgesetzt wird, mit der man sich den veränderten (kausalen) Bedingungen, denen ein Flugzeug während des Fluges unterworfen ist, effizient anpaßt.

Zu diesen Mitteln gehören eine Ventilkontrolleinheit 7, ein Luftsammelbehälter 16, eine Kompressoreinheit 8 und luftstrombezogen mit ihnen verbundene Luftstrom-Verbindungsleitungen, deren Anordnung aus der Fig. 1 ersichtlich wird. Zu den Luftstrom-Verbindungsleitungen zählen:
a) eine Rohrleitung(sbrücke) 9, die den Luftsammelbehälter 16 mit der ihm nachgeordneten Kompressoreinheit 8 verbindet;
b) ein Rohrleitungsabgang 12, welcher der Kompressoreinheit 8 nachgeordnet ist und mit einem Luftauslaß 13, der in der Rumpf(heck)struktur des Flugzeuges sitzt, verbunden ist;
c) eine Zapfluft-Rohrleitungsverbindung 17 (Reverse Flow Leitung), die dem Luftsammelbehälter 16 abgezweigt ist und auf der eine regelbare Zapfluft-Regelventilschnittstelle sitzt;
d) eine By-Pass-Rohrleitungsverbindung 10, die (an) der Rohrleitung(sbrücke) 9 abgezweigt ist und auf der eine regelbare By-Pass-Ventilschnittstelle 11 sitzt.

Die Rohrleitungen 5 sind mit einer Ventil-Kontrolleinheit 7 versehen. Letztere umfaßt mehrere Luftabsaugregelventile 71, die einzeln in jede ihnen zugeordnete Rohrleitung (5) eingesetzt sind. Im später erläuterten Absaugemode reguliert die Ventil-Kontrolleinheit 7 eine oberflächenbezogene definierte Absaugverteilung am Vorderkantenbereich 31 des Seitenleitwerksnasenteiles 3. Die Rohrleitungen 5 münden in den Luftsammelbehälter 16, dem die Luftabsaugregelventile 71, welche nahe jedem Rohrleitungsausgang installiert sind, vorgeordnet sind.
Eine (nicht gezeigte) Kontrolleinrichtung, die man an bestimmter Stelle im Inneren des Rumpfhecks platziert und die wenigstens aus einem Kontroller (Regler) besteht, steuert über Signalleitungen die Luftabsaug-Regelventile 71 auf der Basis bezogener Sensorsignale separat an. Auf der Rohrleitung(sbrücke) 9 sitzt jeweils eine Rohrleitungs-Ventilschnittstelle 14, 15, die der Kompressoreinheit 8 vor- und / oder nachgeordnet ist. Mit deren Unterstützung läßt sich die Kompressoreinheit 8 lastfrei hochfahren, weil beispielsweise durch Sperrung der beiden Regelventile der Rohrleitungs-Ventilschnittstelle 14, 15, die unmittelbar vor- und nachgeschalten sind, die Luftstromzu- und abfuhr unterbrochen wird.

Die Kompressoreinheit 8 besteht (allgemein) aus einem mehrstufige Absaugegebläse, die in Korrelation der abzusaugenden Luftmenge kontrolliert (gesteuert durch die vorerwähnte Kontrolleinrichtung) zu- oder abgeschalten werden. Die Stufen des Absauggebläses sind nicht abschaltbar. Der Anstellwinkel der Gebläseschaufeln des Absaugegebläses läßt sich in Korrelation der abzusaugenden Luftmenge verändern. Die Drehzahlregelung des Absaugegebläses kann stufenlos oder in Stufen geschehen.

Beispielgemäß wird die Kompressoreinheit 8 derart ausgeführt, wonach man als Absaugedevice ein dreistufiges Absauggebläse (Fan) eingesetzt, dessen Gebläseschaufeln nicht regelbar sind, wobei es demnach ohne Drehzahlregelung (ohne zu- bzw. abschaltbare Stufenregelung des Absauggebläses) arbeitet.

Nahe dem Ausgang der betreffenden Rohrleitung 5, der in den Luftsammelbehälter 16 mündet, sitzen an deren Innenwandung (wenigstens) ein Druck- und ein Temperatur- und ein Durchflußsensor. Die Sensoren ergeben eine Meßstrecke, welche (im Absaugemode) gemeinsam den tatsächlich fließenden Absaugestrom sensorisch erfassen. Dabei wird die Luft strömung in der Rohrleitung entsprechend ihrem tatsächlichen Zustand (bezüglich der Kriterien: Druck, Temperatur, Volumen und Masse) meßtechnisch bewertet und die Meßergebnisse der Kontrolleinheit zugeleitet. Letztere vergleicht den sensorisch ermittelten Zustand mit einer (im Kontroller) gespeicherten Vorgabe und bestimmt daraus die einzuregelnde Ventilposition des betreffenden Luftabsaug-Regelventils 71.

Der Querschnitt des Hohlraumes der (nach innen gerichteten geschlossenen) Kammer 41 fällt insbesondere im Staulinienbereich des Seitenleitwerknasenteiles 3 bzw. des beispielgemäß (dafür vorgesehenen) oberen Seitenleitwerksnasenteiles 33 sehr klein aus. Deshalb sind den Kammern 41 zusätzliche (nicht dargestellte) Zapfleitungen (Rohrleitungen) zugeordnet, die mit der Ventil-Kontrolleinheit 7 verbunden sind. Damit wird - spannweitig verteilt dem Seitenleitwerk 1 (bzw. dem oberen Seitenleitwerksnasenteil 33) - zusätzlich abgesaugte Luft aus den Kammern 41 abführt, so daß sich eine relativ gleichmäßige spannweitige Absaugeverteilung am (oberen) Seitenleitwerksnasenteil 3 einstellt.

Die Zapfleitungen - später Absaugeleitungen 5 - sind mit dem Luftsammelbehälter 16 verbunden, die über die Rohrleitung(sbrücke) 9 der Kompressoreinheit 8 die zusätzlich abgesaugte Luft aus den Kammern 41 zuführen. Die Tappings (Zapfleitungen) gehen später in die Absaugeleitung 5 der ihnen zugehörigen Kammer 41 über.

Weiterhin sind im Luftauslaß 13 mehrere (nicht dargestellte) Sensoren installiert. Die Sensoren ermitteln den durch die Kompressoreinheit 8 abgeführten Gesamtmassenluftstrom . Sie sind über Signalleitungen mit der Kontrolleinrichtung verbunden und wandeln den tatsächlich fließenden Gesamtmassenstrom der Abluft in entsprechende Signale um. Die Kontrolleinrichtung vergleicht dann diese ihr zugeleiteten Signale mit einer gespeicherten Vorgabe. Auf der Basis des Vergleiches wird dann eine By-Pass-Schnittstelle 11 angesteuert, welche (auf der Grundlage des meßtechnischen Vergleiches) die Zufuhr der durch die By-Pass-Rohlleitungsverbindung 14 eingelassenen Fremdluft regelt und den Betriebspunkt der Kompressoreinheit 8 stabil hält. Die By-Pass-Ventilschnittstelle 11 selbst ist mittels einem By-Pass-Regelventil realisiert.

Der Luftauslaß 13 selbst ist definitiv an einer Stelle im Flugzeugrumpf installiert, auf der wertmäßig ein niedriger Außendruck und niedriger Cp-Wert lastet. Infolge der niedrigen Zustandswerte kann die den Rohrleitungsabgang 12 passierende Abluft, die der Kompressoreinheit 8 abgeleitet wird, nahezu selbsttätig ausströmen.

Zusätzlich ist dem Luftsammelbehälter 16 eine Zapfluft-Rohrleitungsverbindung 17 abgezweigt, die allgemein mit dem Flugzeug-Druckluftsystem in Verbindung steht. Da mit der beschriebenen Seitenleitwerkstruktur sekundär gleichzeitig ein Vereisen der Oberfläche des Leitwerkes 1 (wenigstens des Vorderkantenbereiches 31 des Seitenleitwerksnasenteiles 3) verhindert werden soll, wird die Zapfluft-Rohrleitungsverbindung 17, auf der eine regelbare Zapfluft-Regelventilschnittstelle sitzt, an eine Bleed-Air-Rohrleitungsverbindung 18, auf der ein Bleed-Air-Sperrventil sitzt, angeschlossen. Dabei wird die Zapfluft-Rohrleitungsverbindung 17 mit warmer und unter Druck befindlicher Zapfluft der Triebwerke und / oder der Hilfsgasturbine versorgt.

Ergänzt wird die Seitenleitwerkstruktur mit einer verschwenkbaren Kamera 19, deren Optik auf den Seitenleitwerksnasenteil 3 und / oder auf die Seitenleitwerk-Tragstruktur 2 gerichtet ist. Die als IR-Kamera ausgeführte Kamera 19 wird dazu eingesetzt, um das Verhalten der durch kontrollierte Absaugung gestörten Grenzschicht 6 während deren Beeinflußung im Reiseflug eines Passagierflugzeuges zu beobachten. Das mit Infrarot-Technik versehene (IR-)Aufnahmegerät wird in einer der beiden Höhenflossen 20 des Höhenleitwerkes installiert sein.

Die Positionierung von zwei IR- Aufnahmegeräten auf jeder Höhenflosse 20 jeweils ein Aufnahmegerät -, die die Seitenflächen das Seitenleitwerk 1 beiderseitig beobachten, wäre auch denkbar.
Auf der Seitenleitwerk-Tragstruktur 2 liegt wenigstens ein (nicht gezeigtes) Flächenheizelement, das eine konstante Oberflächentemperatur zur Transitionslagenbestimmung mit Hilfe der Kamera 19 realisiert.

Weiterhin wird zur Bestimmung des tatsächlichen Luftwiderstandes am Seitenruder 21 des Seitenleitwerkes 1 ein Nachlaufrechen 22 schwenkbar befestigt, der den Luftdruck im Nachlaufbereich des Seitenruders 21 an mehreren Stellen erfaßt, um den Einfluß des abgesaugten Seitenleitwerkes 1 auf die Luftströmung zu messen.
Der Nachlaufrechen 22 selbst ist am vertikalen freien Ende des Seitenruders 21 vertikal verschiebbar (traversierbar) aufgebaut und in einem definierten Bereich diesem gegenüber beweglich angebaut.

Im folgenden wird die Funktion der (Absauge-) Seitenleitwerksstruktur eingehender beschrieben. Wie bezweckt - soll mit ihr über die Absaugung der gestörten Grenzschicht bzw. wenigstens der Mikroturbulenzen mit der Seitenleitwerksstruktur im Bereich vorherrschender Laminarströmung (primär) die laminare Strömung am Seitenleitwerk 1 stabilisiert werden. Weiterhin soll die laminare Lauflänge der laminaren Strömung an den Seitenflächen des Seitenleitwerkes 1 - bis nahe der Ruderseitenfläche des Seitenruders 21 - auf ein Maximum ausgedehnt werden, um die größmögliche Widerstandsersparnis zu erzielen, allerdings nur bis kurz vor das Seitenruder 21, um die Ruderwirksamkeit (wegen bestehender Gefahr der Strömungsablösung) nicht zu beeinträchtigen. Dort muß turbulente Strömung vorliegen.

Im Absaugemode wird deshalb die Oberfläche der (vorgenannten) Seitenleitwerksnasenkästen mit einem aus Titan bestehenden perforierten Außenblech versehen, durch deren (lasergebohrten) Löcher die kontrollierte Absaugung der gestörten Grenzschicht (im Reiseflug des Flugzeuges) erfolgen wird. Unterhalb dem Außenblech befindet sich die tragende / stützende Struktur des Flächenelementes 43, die gleichzeitig nach innen gerichtete geschlossene Kammern 41 (als Kammernstruktur) ausbildet.
Infolge dessen, daß mit dem Lüfter (dem Absaugedevice) des (dreistufigen) Gebläses der nötige Unterdruck zur Absaugung erzeugt wird, der gleichzeitig den Massendurchsatz der abzusaugenden Grenzschichtluft durch das (den betreffenden) Seitenleitwerksnasenteil 3 initiiert, wird die (am Vorderkantenbereich 31 abgesaugte) Luft spannweitig dem Seitenleitwerk 1 abgeführt und über die mit der Kammerstruktur verbundenen Rohrleitungen 5 danach in den Luftsammelbehälter 16 geleitet. Bei diesem Vorgang befinden sich das Bleed-Air-Sperrventil der Bleed-Air-Rohrleitungsverbindung 18 bzw. das Regelventil der Zapfluft-Regelventilschnittstelle der Zapfluft-Rohrleitungsverbindung 1 7 - während des Absaugemode - im geschlossenen Zustand. Die Shut-Off-Ventile der ersten und zweiten Rohrleitungs-Ventilschnittstelle 14, 15 sind - während des Absaugemode - geöffnet, weshalb die in Spannweitenrichtung abgesaugte Luft ungehindert zur Kompressoreinheit 8 (in das Rumpfinnere) geleitet wird. Der Absaugluftstrom je Kammer 41 wird dabei durch die Luftabsaug-Regelventile 71 geregelt, wobei auf Basis der Sensorsignale (des Druck- und des Temperatur- und des Durchflußsensors an der Innenwandung (nahe dem in den Luftsammelbehälter 16 mündenden Ausgang) der betreffenden Rohrleitung 5) in der Meßstrecke der Absaugeluftstrom sensorisch ermittelt und durch die (im Rumpfinneren sitzende) Kontrolleinheit mit einer Vorgabe verglichen wird. Aus dem Vergleich des sensorisch ermittelten tatsächlichen Zustandes mit der gespeicherten Vorgabe wird im Ergebnis die entsprechende Ventilposition des betreffenden Luftabsaug-Regelventils 71 durch die Kontrolleinheit bestimmt und dementsprechend am betreffenden Luftabsaug-Regelventils 71 eingeregelt. Um die Anzahl der Gebläseeinheiten (Absaugedevice) zu reduzieren, werden die Rohrleitungen 5 (vor der Kompressoreinheit 8) in dem Luftsammelbehälter 16 zusammengeführt. Da die Gebläseeinheit eine Strömungsmaschine darstellt, muß der Betriebspunkt der Kompressoreinheit 8 (nahezu) stabilisiert werden.

Das geschieht vermittels des By-Pass-Ventils der By-Pass-Ventilschnittstelle 11. Danach wird der Gesamtluftstrom, der die Kompressoreinheit 8 (die Gebläseeinheit) passiert, sensorisch mittels der im Luftauslaß 13 angeordneten Sensoren erfaßt, und mit einer gespeicherten Vorgabe durch die Kontrolleinrichtung verglichen. Die Kontrolleinrichtung, welcher der sensorisch ermittelte tatsächliche fließende Gesamtmassenstrom zugeleitet wird, vergleicht das Ergebnis mit einer gespeicherten Vorgabe und steuert dann auf Basis des Vergleiches die By-Pass-Schnittstelle 11 an.
Durch die Regelung der Fremdluftzufuhr mittels dem By-Pass-Ventil, das den Betriebspunkt des Absaugegebläses (des Absaugedevices) der Kompressoreinheit 8 stabilisiert, wird demnach verhindert, daß dem Absaugegebläse zuwenig Luft zugeführt wird, wodurch mit dieser Maßnahme ein Strömungsabriß an den Leitschaufeln der Strömungsmaschine verhindert wird, was sonst zu einer Zerstörung derselben führen könnte.
Es wird angemerkt, daß durch die By-Pass-Rohrleitungsverbindung 10 (bei geöffnetem By-pass-Regelventil bzw. geöffneter By-Pass-Ventilschnittstelle 11) dann ein kontrollierter Luftstrom der Kompressoreinheit 8 einströmt, so daß der die Kompressoreinheit 8 passierende Gesamtluftstrom sich aus der Summe: Absaugleitungs-Luftstrom plus By-Pass-Luftstrom bildet. Mit dem über die By-Pass-Rohrleitung eingelassenen Fremdluftstrom wird der durch die Kompressoreinheit 8 geleitete Gesamtluftstrom stabil gehalten. Die By-Pass-Schnittstelle 11 regelt (auf 3asis des Ergebnisses des Vergleiches) die Zufuhr der bezogenen Fremdluft, die durch die By-Pass-Rohrleitungsverbindung 14 eingelassenen wird, derart, daß sich der Betriebspunkt der Kompressoreinheit 8 stabil hält. Dadurch werden zwei getrennte Regelkreise eingerichtet, die relativ schnell reagieren und durch die Summierung der abgesaugten (zugeleiteten) Einzelluftströme pro (Absaug-) Rohrleitung 5 plus dem By-Pass-(Fremd-)Luftstrom somit eine Fehlerübertragung vermeiden.
Die abgesaugte Luft (der Grenzschicht 6) wird - nach ihrem Passieren durch die Kompressoreinheit 8 - durch den Luftauslaß 13 (hier durch ein im Flugzeugrumpf eingelassenes Fenster) kontrolliert ausgeblasen. Ideal für den Ort des Luftauslasses 13 ist eine Stelle möglichst niedrigen Druckes (niedrigsten Cp-Wertes) außerhalb des Flugzeugrumpfes, da hierdurch die erforderliche Leistung des Absaugegebläses (Absaugedevices) - infolge selbsttätigem Strömen der Abluft - reduziert werden kann.

Es besteht weiterhin die Möglichkeit, (während der Start- und Landephase des Flugzeuges) mit der Seitenleitwerksstruktur (sekundär) einen Vereisungsschutz der Außenhaut des Seitenleitwerkes 1 auszuüben. Dabei wird warme Triebwerksluft durch das vorangestellte Absaugsystem in umgekehrter Richtung ausgeblasen, um Wasser / Kondensat und anfallende Verschmutzung aus dem Absaugsystem bzw. aus der Perforation der einzelnen Elemente (und insbesondere aus den Löchern der Schicht 46) zu entfernen und / oder die Oberfläche des Seitenleitwerksnasenteiles 3 zu enteisen bzw. eine Vereisung zu verhindern. Gleichzeitig muß der Absaugemode abgeschaltet sein, um die Funktion des Vereisungsschutzes zu gewährleisten.

Die Aktivierung des Vereisungsschutzes erfordert, daß sich die beiden Shut-Off-Ventile der ersten und zweiten Rohrleitungs-Ventilschnittstelle 14, 15 sowie das By-Pass-Ventil der By-Pass-Ventilschnittstelle 11 im geschlossenen Zustand befinden.

Bei geöffnetem Bleed-Air-Sperrventil - der regelbaren Zapfluft-Regelventilschnittstelle-gelangt über die Zapfluft-Rohrleitungsverbindung 17 warme und unter Druck befindliche Zapfluft der Triebwerke oder der Hilfsgasturbine, wobei die Zapfluft über den Luftsammelbehälter 16 in die einzelnen Rohrleitungen 5 strömt, die nach dem Passieren der Kammerstruktur und den nachgeschalteten Perforationen des Seitenleitwerksnasenteiles 3 durch das Löchermuster der Schicht 46 (des Außenbleches) bzw. durch die Absaugenasen strömt.

Es wäre denkbar, daß die Ventil-Kontrolleinheit 7 in Abhängigkeit des festgestellten Zustandes (bezüglich der aktuellen Druck-, Temparatur-, Durchflußmengen-Verhältnisse an der Schicht 46) mittels geeigneter Elemente (Sensoren) die Bleed-Air-Zuluft regelt und gleichzeitig Signale zur kontrollierten Regelung des Bleed-Air-Sperrventiles setzt.

Mit der Kontrolleinheit im Rumpfinneren, die mit der Ventil-Kontrolleinheit 7 verbunden ist, wäre ein Soll-/Ist-Vergleich (aktueller Zustand im Vergleich mit einer Vorgabe) realisierbar, wodurch sich entsprechende Ventilstellungen zur kontrollierten Zapfluftzufuhr einregeln lassen.

Erwähnt wird, daß zur Bestimmung der tatsächlichen Widerstandsersparnis (durch Absaugung der Grenzschicht am Seitenleitwerk 1) ein Nachlaufrechen 22 am Seitenruder 21 befestigt ist, der die Druckverteilung hinter dem Seitenruder 21 aufzeigen wird. Um eventuellen Turbulenzkeilen ausweichen zu können, ist dieser Nachlaufrechen 22 traversierbar aufgebaut und kann in einem bestimmten Bereich hinter dem Seitenruder 21 vertikal verschiebbar beweglich gefahren werden.

Weiterhin ist zur Bestimmung der Transitionslage (Übergang laminar zu turbulent) eine Infrarot-Kamera in eine Höhenflosse 20 eingebaut. Diese IR-Kamera blickt mit ihrer Optik auf die Seitenleitwerksbox, auf der Heizmatten aufgebracht sind, welche eine Referenztemperatur einstellen und halten. Je nach Kühlungsgrad durch die Umströmung (turbulente Strömung ist stärker als laminare Strömung) stellt sich eine Oberflächentemperatur ein. Über das Temperaturbild ist somit die Umschlagslage zu erkennen.

In der nachfolgenden Zusammenfassung wird hervorgehoben, daß mit der vorgestellten Seitenleitwerksstruktur eine kontrollierte Beeinflußung der gestörten Grenzschicht 6 am Seitenleitwerk 1 erreicht wird und außerdem ein Vereisen der Seitenleitwerksoberfläche verhindert wird. Mit geeigneten Maßnahmen wird eine weitestgehend ungestörte homogene Absaugeoberfläche realisiert, wobei man eine Teilung zwischen dem abgesaugten und nicht abgesaugten Teil (Streifen) der angeströmten Nasenoberfläche des Seitenleitwerks 1 vermeidet. Die Verblockung ist sehr gering.

Es wird jeder einzelne Absaugebereich (jede Kammer 41) einzeln angesteuert, das heißt die Absaugemenge pro Kammer ist über Regelventile einzeln einstellbar (regelbar).

Durch das Einstellen einer bestimmten (minimalen) Absaugemenge (No-Outflow Requierements) wird ein Kammerausströmen vermieden, wodurch der Verursachung einer Strömungsablösung vorgebeugt wird.
Andererseits läßt sich - bei Abschaltung des Absaugemode - das Ausblasen von warmer Luft an der Nasenoberfläche erreichen, wobei sich mit geeigneten (vorbeschriebenen) Maßnahmen eine bestimmte Ausblasemenge definiert einstellen läßt (Outflow Requierements), wodurch andererseits für den Ausblasefall eine maximale Luftmenge zur Verfügung stehen würde.

Für die Aufteilung der Absaugebereiche ist es denkbar, zwei getrennte Bereiche abzusaugen; einmal den Staubereich mit einem hohen Druckgradienten, aber geringeren Flowraten, und zum anderen den nachfolgenden Bereich mit niedrigem Druckgradienten, allerdings hohen Flowraten. Damit läßt sich eine energetische Optimierung betreiben. Die Seitenleitwerksstruktur weist zwei getrennte Regelkreise (Regelung der By-Pass-Schnittstelle 11 über Sensoren im Luftauslaß 13 und Regelung der Einzelflowraten in den Kammern 41 über die Ventil-Kontrolleinheit 7) auf, deren Vorteile vorbeschrieben sind. Dadurch ist das Absaugegebläse (Absaugedevice) der Kompressoreinheit 8 unabhängig von den einzelnen Flowraten in der Kammerstruktur, da diese über den By-Pass kompensiert werden. Um die Einschaltströme für ein (beispielsweise) elektrisch angetriebenes Absaugegebläse (Fan) zu reduzieren und Stromspitzen zu verhindern, ist eine Anlaufelektronik vorgesehen, die die Phasen des Stromes langsam gleichrichtet, wodurch der Gebläsemotor langsam hochläuft, bis er seine Nenndrehzahl erreicht und durchgeschaltet wird.

## Patentansprüche

1. Seitenleitwerksstruktur für ein Flugzeug, bei der einer Seitenleitwerk-Tragstruktur stirnseitig ein Seitenleitwerksnasenteil fest aufsitzt, dessen nach innen gekrümmter und parabelgenähert geformter Nasenprofilrand durchlässig aufgebaut und durch Kammern, die in der Spannweite eines Seitenleitwerkes einen geschlossenen Kanalverlauf besitzen, unterteilt ist, bei der die Außenfläche des Nasenprofilrandes perforiert ausgeführt ist, der ein perforiertes Flächenelement, das der Form des Nasenprofilrandes angepaßt ist, befestigt aufliegt, wobei der Nasenprofilrand mit dem Flächenelement, das funktionell als Trag- und Stützstruktur ausgebildet ist, eine Verbundstruktur bildet, bei der die Innenfläche des Nasenprofilrandes einen spannweitenweise dem Seitenleitwerk liegenden und begrenzenden Hohlraum einschließt, den die Seitenleitwerk-Tragstruktur begrenzt, wobei mindestens ein Ende der Kammern und des Hohlraumes verschlossen ist, bei der auf dem Flächenelement eine perforierte Schicht aufgebracht ist, die den Vorderkantenbereich des Seitenleitwerksnasenteiles überdeckt, bei der wenigstens eine Rohrleitung mit der betreffenden Kammer in Verbindung steht, deren Verbindungsübergang zum nicht perforierten Nasenbereich des Seitenleitwerks durch Kapselung erfolgt, wobei eine Kompressoreinheit vorgesehen ist, mit der sich die Erzeugung eines Unterdruckes in den Kammern verwirklichen läßt, **dadurch gekennzeichnet,**
**daß** die Rohrleitungen (5) mit einer Ventil-Kontrolleinheit (7), die mehrere Luftabsaugregelventile (71) umfaßt, die einzeln in jede ihnen zugeordnete Rohrleitung (5) eingesetzt sind, versehen sind, wobei die Ventil-Kontrolleinheit (7) eine oberflächenbezogene definierte Absaugverteilung am Vorderkantenbereich (31) des Seitenleitwerksnasenteiles (3) reguliert, daß die Ventil-Kontrolleinheit (7) mit einer Kontrolleinrichtung, die wenigstens aus einem Kontroller besteht, verbunden ist und letztere die Luftabsaug-Regelventile (71) auf der Basis bezogener Sensorsignale separat ansteuert, daß die Rohrleitungen (5) in einen Luftsammelbehälter (16) münden, dem die Luftabsaugregelventile (71) vorgeordnet sind, daß der Luftsammelbehälter (16) mit der ihm nachgeordneten Kompressoreinheit (8) verbunden ist, deren beiderseitige Verbindung mittels einer Rohrleitungsbrücke (9) erfolgt, und ein Rohrleitungsabgang (12) der Kompressoreinheit (8) mit einem äußeren Luftauslaß (13) in Verbindung steht, daß zum lastfreien Hochfahren der Kompressoreinheit (8) ihr jeweils eine Rohrleitungs-Ventilschnittstelle (14, 15) vor- und / oder nachgeordnet ist, daß der Rohrleitungsbrücke (9) eine By-Pass-Rohrleitungsverbindung (10) abgezweigt ist, wobei über eine ihr aufsitzende regelbare By-Pass-Ventilschnittstelle (11) die Fremdluftzufuhr erfolgt.

2. Seitenleitwerksstruktur nach Anspruch 1,
**dadurch gekennzeichnet, daß** die auf der Rohrleitungsbrücke (9) liegende Abzweigung der By-Pass-Rohrleitungsverbindung (10) zwischen dem Luftsammelbehälter (16) und der diesem nachgeordneten Rohrleitungs-Ventilschnittstelle (14) angeordnet ist.

3. Seitenleitwerksstruktur nach Anspruch 1,
**dadurch gekennzeichnet, daß** die Seitenleitwerk-Tragstruktur (2) einen Seitenleitwerkskasten verkörpert, der auf die Spannweite des Seitenleitwerkes (1) bezogen mehrgeteilt ausgeführt ist, so daß wenigstens zwei spannweitenweise hintereinander angeordnete Seitenleitwerksnasenkastenteile, ein oberes Seitenleitwerksnasenkastenteil, dessen obere stirnseitige Außenfläche zur Leitwerksspitze gerichtet ist, und ein unteres Seitenleitwerksnasenkastenteil, dessen untere stirnseitige Außenfläche zur Leitwerkswurzel gerichtet ist, wobei die stirnseitigen Innenflächen beider Seitenleitwerksnasenkastenteile an einer Schnittstelle des geteilten Seitenleitwerkskastens zueinander anliegen, in ihrer Integration den Seitenleitwerksnasenkasten ergeben.

4. Seitenleitwerksstruktur nach Anspruch 1,
**dadurch gekennzeichnet, daß** der Seitenleitwerksnasenteil (3) auf die Spannweite des Seitenleitwerkes (1) bezogen mehrgeteilt ausgeführt ist, so daß wenigstens zwei spannweitenweise hintereinander angeordnete Seitenleitwerksnasenteile (32; 33), ein oberes Seitenleitwerksnasenteil (32), dessen obere stirnseitige Außenfläche zur Leitwerksspitze gerichtet ist, und ein unteres Seitenleitwerksnasenteil (33), dessen untere stirnseitige Außenfläche zur Leitwerkswurzel gerichtet ist, wobei die stirnseitigen Innenflächen beider Seitenleitwerksnasenteile (32; 33) an einer Schnittstelle des geteilten Seitenleitwerksnasenteiles (3) zueinander anliegen, in ihrer Integration das Seitenleitwerksnasenteil (3) ergeben.

5. Seitenleitwerksstruktur nach den Ansprüchen 3 und 4,
**dadurch gekennzeichnet, daß** die Seitenleitwerksnasenteile (32; 33) auf die Spannweite des Seitenleitwerkes (1) bezogen stirnseitig den Seitenleitwerksnasenkastenteilen fest aufsitzen, so daß bei einer zweigeteilten Ausführung des Seitenleitwerksnasenteiles (2) und des Seitenleitwerksnasenkastenteiles das obere Seitenleitwerksnasenteil (32) dem oberen Seitenleitwerksnasenkastenteil und das untere Seitenleitwerksnasenteil (33) dem unteren Seitenleitwerksnasenkastenteil befestigt ist.

6. Seitenleitwerksstruktur nach Anspruch 1,
**dadurch gekennzeichnet, daß** mindestens ein Druck- und ein Temperatur- und ein Durchflußsensor, die zusammen eine Meßstrecke bilden, an der Innenwandung nahe dem in den Luftsammelbehälter (16) mündenden Ausgang der jeweiligen Rohrleitung (5), befestigt ist, welche gemeinsam den tatsächlich fließenden Absaugestrom sensorisch erfassen, der der Kontrolleinheit zugeleitet wird, die den sensorisch ermittelten tatsächlichen Zustand mit einer gespeicherten Vorgabe vergleicht und daraus die entsprechende Ventilposition des betreffenden Luftabsaug-Regelventils (71) bestimmt.

7. Seitenleitwerksstruktur nach Anspruch 1,
**dadurch gekennzeichnet, daß** auf der Oberfläche des Flächenelementes (43) ein perforiertes Blech befestigt ist, durch dessen Perforation die gestörte Grenzschicht (6) kontrolliert abgesaugt wird.

8. Seitenleitwerksstruktur nach Anspruch 1,
**dadurch gekennzeichnet, daß** der Kammerhohlraumquerschnitt der nach innen gerichteten geschlossenen Kammer (41), insbesondere im Staulinienbereich des Seitenleitwerksnasenteiles (3), sehr klein ausfällt, dem zusätzliche und mit der Ventil-Kontrolleinheit (7) verbundene Zapfleitungen, abgezweigt sind, die spannweitig verteilt dem Seitenleitwerk (1) zusätzlich abgesaugte Luft aus den Kammern (41) abführt, so daß sich eine relativ gleichmäßige spannweitige Absaugeverteilung am Seitenleitwerksnasenteil (3) einstellt.

9. Seitenleitwerksstruktur nach Anspruch 1,
**dadurch gekennzeichnet, daß** die Kompressoreinheit (8) mehrstufige Absaugegebläse aufweist, die in Korrelation der abzusaugenden Luftmenge kontrolliert zu- oder abgeschalten werden.

10. Seitenleitwerksstruktur nach Anspruch 9,
**dadurch gekennzeichnet, daß** die Kompressoreinheit (8) wenigstens ein dreistufiges Absauggebläse aufweist.

11. Seitenleitwerksstruktur nach den Ansprüchen 9 und 10,
**dadurch gekennzeichnet, daß** die Stufen des Absauggebläses nicht abschaltbar sind, und daß der Anstellwinkel der Gebläseschaufeln des Absaugegebläses in Korrelation der abzusaugenden Luftmenge sich verändern lassen und / oder die Drehzahlregelung des Absaugegebläses stufenlos oder in Stufen realisiert ist.

12. Seitenleitwerksstruktur nach den Ansprüch 1 und 8,
**dadurch gekennzeichnet, daß** die Zapfleitungen mit dem Luftsammelbehälter (16) verbunden sind, die über die Rohrleitungsbrücke (9) der Kompressoreinheit (8) die zusätzlich angesaugte Luft aus den Kammern (41) zuführen.

13. Seitenleitwerksstruktur nach Anspruch 1,
**dadurch gekennzeichnet, daß** die By-Pass-Ventilschnittstelle (11) mittels einem By-Pass-Regelventil realisiert ist.

14. Seitenleitwerksstruktur nach den Ansprüchen 1 und 13,
**dadurch gekennzeichnet, daß** im Luftauslaß (13) mehrere Sensoren installiert sind, welche den durch die Kompressoreinheit (8) angesaugten Gesamtmassenstrom, den wenigstens ein Absaugegebläse der Kompressoreinheit (8) ansaugt, ermitteln, und daß die Sensoren im Luftauslaß (13) mit der Kontrolleinrichtung verbunden sind, welcher der sensorisch ermittelte tatsächliche fließende Gesamtmassenstrom zugeleitet wird, den sie mit einer gespeicherten Vorgabe vergleicht und auf Basis des Vergleiches die By-Pass-Schnittstelle (11) ansteuert, die damit die Zufuhr der durch die By-Pass-Rohlleitungsverbindung (14) eingelassenen Fremdluft regelt und den Betriebspunkt der Kompressoreinheit (8) stabil hält.

15. Seitenleitwerksstruktur nach Anspruch 1,
**dadurch gekennzeichnet, daß** der Luftauslaß (13) an einer Stelle im Flugzeugrumpf installiert ist, auf der ein niedriger Außendruck und niedriger Cp-Wert lastet, wodurch die den Rohrleitungsabgang (12) passierende Abluft nahezu selbsttätig ausströmen kann.

16. Seitenleitwerksstruktur nach Anspruch 1,
**dadurch gekennzeichnet, daß** dem Luftsammelbehälter (16) zusätzlich eine Zapfluft-Rohrleitungsverbindung (17) abgezweigt ist, die mit dem Flugzeug-Druckluftsystem in Verbindung steht.

17. Seitenleitwerksstruktur nach Anspruch 16,
**dadurch gekennzeichnet, daß** die Zapfluft-Rohrleitungsverbindung (17), auf der eine regelbare Zapfluft-Regelventilschnittstelle sitzt, an eine Bleed-Air-Rohrleitungsverbindung (18), auf der ein Bleed-Air-Sperrventil sitzt, angeschlossen ist, die mit warmer und unter Druck befindlicher Zapfluft der Triebwerke und / oder der Hilfsgasturbine versorgt wird.

18. Seitenleitwerksstruktur nach Anspruch 1,
**dadurch gekennzeichnet, daß** ein Teilbereich der Verbundstruktur des Seitenleitwerksnasenteiles (3) perforiert ausgeführt ist, auf dem die perforierte Schicht (46) aufgebracht ist.

19. Seitenleitwerksstruktur nach Anspruch 18,
**dadurch gekennzeichnet, daß** nur ein streifenförmiger Bereich der Verbundstruktur perforiert ausgebildet ist, dem die perforierte Schicht (4) aufliegt.

20. Seitenleitwerksstruktur nach Anspruch 1,
**dadurch gekennzeichnet, daß** eine verschwenkbare Kamera (19), deren Optik auf den Seitenleitwerksnasenteil (3) und / oder auf die Seitenleitwerk-Tragstruktur (2) gerichtet ist, um das Verhalten der durch kontrollierte Absaugung gestörten Grenzschicht (6) während deren Beeinflußung im Reiseflug zu beobachten, wenigstens in einer der beiden Höhenflossen eines Höhenleitwerkes installiert ist.

21. Seitenleitwerksstruktur nach den Ansprüchen 1 und 20,
**dadurch gekennzeichnet, daß** auf der Seitenleitwerk-Tragstruktur (2) wenigstens ein Flächenheizelement, das eine konstante Oberflächentemperatur zur Transitionslagenbestimmung mit Hilfe der Kamera (19) realisiert, aufliegt.

22. Seitenleitwerksstruktur nach Anspruch 1,
**dadurch gekennzeichnet, daß** zur Bestimmung des tatsächlichen Luftwiderstandes am Seitenruder (21) des Seitenleitwerkes (1) ein Nachlaufrechen (22) schwenkbar befestigt ist, der den Luftdruck im Nachlaufbereich des Seitenruders (21) an mehreren Stellen erfaßt, um den Einfluß des abgesaugten Seitenleitwerkes (1) auf die Luftströmung zu messen.

23. Seitenleitwerksstruktur nach Anspruch 22,
**dadurch gekennzeichnet, daß** der Nachlaufrechen (22) am vertikalen freien Ende des Seitenruders (21) vertikal verschiebbar aufgebaut ist und in einem definierten Bereich diesem gegenüber beweglich angebaut ist.

## Claims

1. Vertical tail structure for an aircraft, wherein mounted in a fixed manner onto the face of a vertical tail supporting structure is a vertical tail nose part, the inwardly curved and approximately parabolic nose profile edge of which is constructed in a permeable manner and subdivided by chambers, which in the wing span of a vertical tail have a closed channel course, wherein the outer surface of the nose profile edge is of a perforated design and has, fastened and supported thereon, a perforated surface element adapted to the shape of the nose profile edge, the nose profile edge together with the surface element, which is functionally designed as a carrying and supporting structure, forming a composite structure, wherein the inner surface of the nose profile edge encloses a cavity, which lies wing-span-wise to the vertical tail and delimits and which the vertical tail supporting structure delimits, at least one end of the chambers and of the cavity being closed, wherein applied on the surface element is a perforated layer, which covers the leading edge region of the vertical tail nose part, wherein at least one pipe is connected to the relevant chamber, of which the connecting transition to the non-perforated nose region of the vertical tail is effected by cladding, a compressor unit being provided, by means of which the generation of a vacuum in the chambers may be realized,
**characterized in**
**that** the pipes (5) are provided with a valve monitoring unit (7) comprising a plurality of air suction control valves (71), which are inserted individually into each pipe (5) associated with them, wherein the valve monitoring unit (7) regulates a surface-related defined suction distribution at the leading edge region (31) of the vertical tail nose part (3), that the valve monitoring unit (7) is connected to a monitoring device, which comprises at least one controller and controls the air suction control valves (71) separately on the basis of related sensor signals, that the pipes (5) open out into an air collecting tank (16) disposed downstream of the air suction control valves (71), that the air collecting tank (16) is connected to the compressor unit (8) disposed downstream thereof, the connection on both sides of which being effected by means of a pipe bridge (9), and a tail pipe (12) of the compressor unit (8) is connected to an external air outlet (13), that for load-free running-up of the compressor unit (8) there is disposed upstream and/or downstream of the latter in each case a pipe-valve interface (14, 15), that branching off from the pipe bridge (9) is a bypass pipe connection (10), wherein via a controllable bypass-valve interface (11) mounted on the latter the supply of extraneous air is effected.

2. Vertical tail structure according to claim 1,
**characterized in that** the junction of the bypass pipe connection (10) situated on the pipe bridge (9) is disposed between the air collecting tank (16) and the pipe-valve interface (14) disposed downstream of the latter.

3. Vertical tail structure according to claim 1,
**characterized in that** the vertical tail supporting structure (2) comprises a vertical tail casing, which is divided in relation to the wing span of the vertical tail (1) into a plurality of parts so that at least two vertical tail nose casing parts disposed in relation to the wing span one behind the other, namely a top vertical tail nose casing part, of which the top outer end face is directed towards the tail tip, and a bottom vertical tail nose casing part, of which the bottom outer end face is directed towards the tail root, while the inner end faces of both vertical tail nose casing parts lie mutually adjacent at an interface of the divided vertical tail casing, in their integrated state form the vertical tail nose casing.

4. Vertical tail structure according to claim 1,
**characterized in that** the vertical tail nose part (3) is divided in relation to the wing span of the vertical tail (1) into a plurality of parts so that at least two vertical tail nose parts (32; 33) disposed in relation to the wing span one behind the other, namely a top vertical tail nose part (32), of which the top outer end face is directed towards the tail tip, and a bottom vertical tail nose part (33), of which the bottom outer end face is directed towards the tail root, while the inner end faces of both vertical tail nose parts (32; 33) are mutually adjacent at an interface of the divided vertical tail nose part (3), in their integrated state form the vertical tail nose part (3).

5. Vertical tail structure according to claims 3 and 4,
**characterized in that** the vertical tail nose parts (32; 33) are firmly seated, in relation to the wing span of the vertical tail (1), frontally on the vertical tail nose casing parts so that, given a two-piece construction of the vertical tail nose part (2) and of the vertical tail nose casing part, the top vertical tail nose part (32) is fastened to the top vertical tail nose casing part and the bottom vertical tail nose part (33) is fastened to the bottom vertical tail nose casing part.

6. Vertical tail structure according to claim 1,
**characterized in that** fastened to the inner wall close to the outlet of the respective pipe (5) opening into the air collecting tank (16) is at least one pressure sensor and one temperature sensor and one flow sensor, which together form a measuring section and which jointly sense the actually flowing suction stream, which is supplied to the monitoring unit, which compares the sensed actual state with a stored setpoint selection and determines therefrom the appropriate valve position of the relevant air suction control valve (71).

7. Vertical tail structure according to claim 1,
**characterized in that** fastened on the surface of the surface element (43) is a perforated sheet, through the perforation of which the disturbed boundary layer (6) is 'sucked in a controlled manner.

8. Vertical tail structure according to claim 1,
**characterized in that** the chamber cavity cross section of the inwardly directed closed chamber (41), particularly in the ram line region of the vertical tail nose part (3), is very small and has, branching off therefrom, additional discharge lines, which are connected to the valve monitoring unit (7) and distributed over the wing span and remove from the chambers (41) air additionally extracted from the vertical tail unit (1) so that a relatively uniform suction distribution over the wing span arises at the vertical tail nose part (3).

9. Vertical tail structure according to claim 1,
**characterized in that** the compressor unit (8) comprises multistage extraction fans, which are switched on or switched off in a controlled manner in correlation with the air quantity to be extracted.

10. Vertical tail structure according to claim 9,
**characterized in that** the compressor unit (8) comprises at least one three-stage extraction fan.

11. Vertical tail structure according to claims 9 and 10,
**characterized in that** the stages of the extraction fan are not disconnectable, and that the angle of attack of the fan blades of the extraction fan may be varied in correlation with the air quantity to be extracted and/or control of the rotational speed of the extraction fan is realized steplessly or in steps.

12. Vertical tail structure according to claims 1 and 8,
**characterized in that** the tapping lines are connected to the air collecting tank (16) and via the pipe bridge (9) supply the compressor unit (8) with the additionally extracted air from the chambers (41).

13. Vertical tail structure according to claim 1,
**characterized in that** the bypass-valve interface (11) is realized by means of a bypass control valve.

14. Vertical tail structure according to claims 1 and 13,
**characterized in that** installed in the air outlet (13) is a plurality of sensors, which determine the total mass flow, which is taken in by the compressor unit (8) and which is taken in by at least one extraction fan of the compressor unit (8), and that the sensors in the air outlet (13) are connected to the monitoring device, to which the sensed actually flowing total mass flow is supplied and which compares the latter to a stored setpoint selection and on the basis of the comparison controls the bypass interface (11), which therefore regulates the supply of extraneous air admitted through the bypass pipe connection (14) and keeps the operating point of the compressor unit (8) stable.

15. Vertical tail structure according to claim 1,
**characterized in that** the air outlet (13) is installed in the fuselage at a point where there is a low external pressure and a low Cp value, with the result that the exhaust air passing through the tail pipe (12) may flow out almost automatically.

16. Vertical tail structure according to claim 1,
**characterized in that** branching off from the air collecting tank (16) there is additionally a tapped-air pipe connection (17), which is connected to the aircraft compressed air system.

17. Vertical tail structure according to claim 16,
**characterized in that** the tapped-air pipe connection (17), on which a controllable tapped-air control valve interface is seated, is connected to a bleed-air pipe connection (18), on which a bleed-air shut-off valve is seated and which is supplied with warm and pressurized tapped air from the power units and/or the auxiliary gas turbine.

18. Vertical tail structure according to claim 1,
**characterized in that** a sub-region of the composite structure of the vertical tail nose part (3) is of a perforated design and has the perforated layer (46) applied thereon.

19. Vertical tail structure according to claim 18,
**characterized in that** only a strip-shaped region of the composite structure is of a perforated design and has the perforated layer (4) situated thereon.

20. Vertical tail structure according to claim 1,
**characterized in that** a horizontally pivotable camera (19), the lens of which is directed towards the vertical wing nose part (3) and/or towards the vertical tail supporting structure (2), is installed at least in one of the two horizontal stabilizers of an elevator unit in order in flight to observe the behaviour of the boundary layer (6) disturbed by controlled suction during influencing of said boundary layer.

21. Vertical tail structure according to claims 1 and 20,
**characterized in that** supported on the vertical tail supporting structure (2) is at least one surface heating element, which realizes a constant surface temperature for transition position determination with the aid of the camera (19).

22. Vertical tail structure according to claim 1,
**characterized in that**, for determining the actual air resistance, a pitot comb (22) is pivotally fastened to the vertical rudder (21) of the vertical tail (1) and at a plurality of points detects the air pressure in the wake region of the vertical rudder (21) in order to measure the influence of the extracted vertical tail (1) upon the air flow.

23. Vertical tail structure according to claim 22,
**characterized in that** the pitot comb (22) is installed in a vertically displaceable manner on the vertical free end of the vertical rudder (21) and in a defined region is mounted so as to be movable relative thereto.

## Revendications

1. Structure pour empennage vertical d'avion, dans laquelle un élément de nez pour empennage vertical repose sur la face avant d'une structure porteuse à empennage vertical, la bordure profilée du nez incurvée vers l'intérieur et de forme parabolique étant transparente et subdivisée en chambres présentant, dans l'empattement d'un empennage vertical, des cannelures fermées, dans laquelle la surface externe de la bordure profilée du nez est perforée, un élément de surface perforé adapté à la forme de la bordure profilée du nez reposant sur ladite surface, la bordure profilée du nez formant avec l'élément de surface une structure composite conçue de manière fonctionnelle sous la forme d'une structure porteuse et d'appui, dans laquelle la surface interne de la bordure profilée du nez inclut un espace creux situé contre l'empennage vertical, dans le sens de l'empattement, et délimité par la structure porteuse pour empennage vertical, au moins une extrémité des chambres et de l'espace creux étant obstruée, dans laquelle une couche perforée recouvrant le segment d'arête avant de l'élément à nez pour empennage vertical et dans laquelle au moins une des canalisations est reliée à la chambre correspondante reliée au segment à nez non perforé pour l'empennage vertical par blindage, une unité de compression permettant de produire une sous-pression dans les chambres étant prévue, et **caractérisée en ce que**
les canalisations (5) sont dotées d'une unité de commande de soupapes (7) comprenant plusieurs soupapes de réglage de l'aspiration d'air (71) insérées chacune dans la canalisation (5) correspondante, l'unité de commande des soupapes (7) régulant une distribution d'aspiration définie en fonction de la superficie et située sur le segment d'arête avant (31) de l'élément à nez pour empennage vertical (3), **en ce que** l'unité de commande de soupapes (7) est reliée à un dispositif de contrôle composé au moins d'un contrôleur, et **en ce que** ce dernier contrôle les soupapes de réglage de l'aspiration d'air (71) séparément en fonction des signaux de capteurs, **en ce que** les canalisations (5) débouchent dans un récipient collecteur d'air (16) relié en amont à des soupapes de réglage de l'aspiration d'air (71), **en ce que** le récipient collecteur d'air (16) est relié à l'unité de compression située en aval, le raccordement étant assuré des deux côtés à l'aide d'un pont pour conduites (9) et une sortie de la conduite (12) de l'unité de compression (8) étant reliée à une évacuation d'air (13) extérieure, **en ce que** une interface d'aération à conduites est disposée systématiquement en amont et / ou en aval de l'unité de compression, afin d'en augmenter la puissance sans charge et enfin, **en ce que** une raccordement pour conduites de dérivation (10) est dérivé du pont pour conduites (9), l'approvisionnement en air extérieur étant assuré via une interface de ventilation à dérivation réglable appliquée sur ledit raccordement.

2. Structure à empennage vertical selon la revendication 1, **caractérisée en ce que** le branchement du raccordement pour conduites de dérivation situé sur le pont pour conduites (9) est situé entre le récipient collecteur d'air (16) et l'interface d'aération à conduites située en aval.

3. Structure pour empennage vertical selon la revendication 1, **caractérisée en ce que** la structure porteuse à empennage vertical représente un caisson à empennage vertical composé, sur l'empattement dudit empennage (1), de plusieurs parties, à savoir au moins deux éléments de caisson à nez pour empennage vertical disposés l'un derrière l'autre dans le sens de l'écartement, un autre élément de caisson supérieur à nez pour empennage vertical, dont la surface frontale supérieure est orientée vers le sommet de l'empennage et un élément de caisson inférieur à nez pour empennage vertical dont la surface d'attaque extérieure est orientée vers la base de l'empennage, les surfaces d'attaque intérieures des deux éléments de caisson à nez pour empennage vertical étant reliés l'un à l'autre et situés contre une interface du caisson à empennage vertical partagé.

4. Structure pour empennage vertical selon la revendication 1, **caractérisée en ce que** l'élément à nez pour empennage vertical (3) est constitué, dans le sens de l'empattement de l'empennage (1), de plusieurs parties, à savoir au moins deux éléments à nez pour empennage vertical (32 ; 33) disposés l'un derrière l'autre dans le sens de l'empattement, un élément à nez pour empennage vertical supérieur (32) dont la surface d'attaque supérieure est orientée vers le sommet de l'empennage, et un élément à nez pour empennage vertical inférieur (33) dont la surface d'attaque extérieure inférieure est orientée vers la base de l'empennage, les surfaces d'attaque intérieures des deux éléments à nez pour empennage vertical (32 ; 33) étant reliées les unes aux autres contre une interface de l'élément à nez pour empennage vertical (3) partagé.

5. Structure pour empennage vertical selon les revendications 3 et 4, **caractérisée en ce que** les éléments à nez pour empennage vertical (32 ; 33) sont fixés, sur leur surface d'attaque, sur les éléments de caisson à nez pour empennage vertical, dans le sens d'empattement de l'empennage vertical (1), de telle sorte que, lors d'une exécution en deux parties de l'élément à nez pour empennage vertical (2) et de l'élément de caisson à nez pour empennage vertical, l'élément à nez supérieur pour empennage vertical (32) est fixé sur l'élément de caisson à nez pour empennage vertical supérieur et l'élément à nez inférieur pour empennage vertical (33) sur l'élément de caisson à nez pour empennage vertical inférieur.

6. Structure pour empennage vertical selon la revendication 1, **caractérisée en ce que** au moins un capteur de pression, un capteur de température et un capteur d'écoulement formant une section mesurée sont fixés contre la paroi interne, près de la sortie de la canalisation (5) débouchant dans le récipient collecteur d'air (16), lesdits capteurs saisissant conjointement le courant d'aspiration s'écoulant réellement et acheminé vers l'unité de contrôle, laquelle compare la situation effective saisie par les capteurs avec une valeur de référence enregistrée et détermine ainsi la position de ventilation appropriée de la soupape de réglage d'aspiration de l'air (71).

7. Structure pour empennage vertical selon la revendication 1, **caractérisée en ce que** une tôle dotée d'une perforation à travers laquelle la couche limite (6) perturbée est aspirée de manière contrôlée est fixée sur la surface de l'élément de surface (43).

8. Structure pour empennage vertical selon la revendication 1, **caractérisée en ce que** la section transversale de l'espace creux de la chambre fermée (41) orientée vers l'intérieur est très exiguë, surtout dans la zone de la courbe de retenue de l'élément à nez pour empennage vertical (3), d'où partent des canalisations de soutirage supplémentaires reliées à l'unité de commande des soupapes (7), lesdites canalisations étant réparties sur tout l'empattement et guidant l'air aspiré des chambres (41) vers l'empennage vertical (1), de telle sorte qu'une répartition relativement homogène de l'aspiration contre l'élément à nez pour empennage vertical (3) est obtenue.

9. Structure pour empennage vertical selon la revendication 1, **caractérisée en ce que** l'unité de compression (8) présente des souffleries d'aspiration à plusieurs niveaux enclenchées ou déclenchées de manière contrôlée, en fonction de la quantité d'air à aspirer.

10. Structure pour empennage vertical selon la revendication 9, **caractérisée en ce que** l'unité de compression (8) présente au moins une soufflerie d'aspiration à trois niveaux.

11. Structure pour empennage vertical selon les revendications 9 et 10, **caractérisée en ce que** les niveaux de la soufflerie d'aspiration ne peuvent pas être disjonctés, **en ce que** l'angle d'incidence des pales de la soufflerie d'aspiration peut être modifié en fonction de la quantité d'air à aspirer et /ou **en ce que** le régime de la soufflerie d'aspiration est réglé en une seule ou en plusieurs étapes.

12. Structure pour empennage vertical selon les revendications 1 et 3, **caractérisée en ce que** les canalisations de soutirage acheminant l'air aspiré supplémentaire à partir des chambres (41), via le pont pour canalisations (9) de l'unité de compression (8), sont reliées au récipient conteneur d'air.

13. Structure pour empennage vertical selon la revendication 1, **caractérisée en ce que** l'interface de ventilation à dérivation (11) est réalisée à l'aide d'une soupape de réglage à dérivation.

14. Structure pour empennage vertical selon les revendications 1 et 13, **caractérisée en ce que** plusieurs capteurs calculant le courant de masse total aspiré via l'unité de compression (8) par au moins une soufflerie d'aspiration de l'unité de compression (8) ont été installés dans l'évacuation d'air (13), **en ce que** les capteurs sont reliés, dans l'évacuation d'air (13), au dispositif de contrôle vers lequel le courant de masse total effectif calculé par les capteurs est acheminé, le dispositif de contrôle comparant le courant de masse avec une valeur de référence prédéfinie enregistrée et commandant l'interface de dérivation par comparaison, régulant par la même occasion l'arrivée d'air extérieur pénétrant par le raccordement pour conduites de dérivation (14) et stabilisant le point de fonctionnement de l'unité de compression (8).

15. Structure pour empennage vertical selon la revendication 1, **caractérisée en ce que** l'évacuation d'air (13) est installée à un endroit du fuselage de l'avion sur lequel est exercée une pression extérieure faible et une valeur Cp faible, l'air d'échappement traversant la sortie de canalisation (12) pouvant ainsi sortir presque automatiquement.

16. Structure pour empennage vertical selon la revendication 1, **caractérisée en ce que** un raccordement pour canalisations à air de soutirage (17) relié au système à air comprimé de l'avion est dérivé du récipient collecteur d'air (16).

17. Structure pour empennage vertical selon la revendication 16, **caractérisée en ce que** le raccordement pour canalisations à air de soutirage (17) sur lequel repose une interface réglable de ventilation et de réglage de l'air de soutirage est raccordé à un raccordement pour conduites à air d'appoint (18) sur lequel repose une soupape de blocage à air d'appoint, le raccordement pour conduites étant alimenté par de l'air de soutirage chaud et pressuré venant des réacteurs et / ou de la turbine à gaz auxiliaire.

18. Structure à empennage vertical selon la revendication 1, **caractérisée en ce que** un segment partiel de la structure composite de l'élément à nez pour empennage vertical sur lequel la couche perforée est montée présente une perforation.

19. Structure pour empennage vertical selon la revendication 18, **caractérisée en ce que** seul un segment strié de la structure composite sur lequel repose la couche perforée (4) présente une perforation.

20. Structure pour empennage vertical selon la revendication 1, **caractérisée en ce que** une caméra (19) pivotante dont l'optique est dirigée vers l'élément à nez pour empennage vertical (3) et / ou la structure porteuse pour empennage vertical (2) a été installée au moins dans un des deux plans fixes horizontaux d'un empennage vertical, afin d'observer le comportement de la couche limite (6) perturbée par une aspiration contrôlée pendant le vol.

21. Structure pour empennage vertical selon les revendications 1 à 20, **caractérisée en ce que** au moins un élément de chauffage de surface permettant d'obtenir, à l'aide de la caméra (19), une température de surface constante destinée à déterminer les positions intermédiaires, repose sur la structure porteuse pour empennage vertical.

22. Structure pour empennage vertical selon la revendication 1, **caractérisée en ce que** un compteur de vérification (22) saisissant la pression d'air dans le segment de retour du gouvernail de direction (21), à plusieurs endroits, a été fixé de manière flexible au gouvernail de direction (21) de l'empennage vertical (1) afin de déterminer la résistance effective de l'air et de mesurer l'influence de la structure verticale (1) aspirée sur l'écoulement d'air.

23. Structure pour empennage vertical selon la revendication 22, **caractérisée en ce que** le compteur de vérification (22) a été monté à l'extrémité libre verticale du gouvernail de direction (21), de manière à pouvoir coulisser verticalement, et de manière à pouvoir être déplacé par rapport audit gouvernail, dans un segment défini.
